# EUROPEAN PATENT APPLICATION

(11) **EP 4 194 354 A1**
(43) Date of publication of application: **14.06.2023**
(21) Application number: 21306729.1
(22) Date of filing: 08.12.2021
(51) Int. Cl.: B65D 5/24, D04H 1/551, B29C 65/00

(54) **FOLDED CARDBOARD CONTAINER**

(71) Applicant: SIPALAX 2, 39220 Bois-d'Amont (FR)
(72) Inventor: ARDIET, Laurent, 39300 CHAMPAGNOLE (FR); LACROIX, Denis, 39220 BOIS-D AMONT (FR)
(74) Representative: Plasseraud IP

(57) **Abstract**

A container (10) has a cellulose sheet, the cellulose sheet folded into a receptacle having a bottom wall (11) and side walls (12), and joints (15) at junctions between adjacent pairs of the side walls. The container is characterized in that the joints are defined by overlapping surfaces of the cellulose sheet resulting from folds in the cellulose sheet, the overlapping surfaces being connected by autogenous welds of the cellulose sheet.

## Description

### TECHNICAL FIELD

The application relates to folded cardboard containers used in the packaging industry for products such as foodstuff, cosmetics, or objects or materials of various types.

### BACKGROUND

Containers are traditionally used when packaging foodstuff in liquid or loose form, objects, material. While plastics have been commonly used due to their properties, there remains a demand for the use of cellulose for containers. There are various reasons for the popularity of cellulose for containers, notably the use of natural fibers for such containers, the compostable nature of some of these cellulose containers, the possibility of using recycled fibers, and the sustainability, to name a few advantages. However, such containers may still have adhesives, polymer films and/or sealants to preserve waterproofness and structural integrity, and this may have a negative impact on the carbon footprint of cellulose containers. Moreover, cost effectiveness may also favor plastics over cellulose containers.

It would therefore be desirable to improve manufacturing techniques and cellulose containers based on the above.

### SUMMARY

In one aspect, there is provided a container comprising: a cellulose sheet, the cellulose sheet folded into a receptacle having a bottom wall and side walls, and joints at junctions between adjacent pairs of the side walls; characterized in that the joints are defined by overlapping surfaces of the cellulose sheet resulting from folds in the cellulose sheet, the overlapping surfaces being connected by autogenous welds of the cellulose sheet.

Further in accordance with the aspect, for example, the cellulose sheet is a 100% fiber sheet having an integral surface coating on at least one surface thereof.

Still further in accordance with the aspect, for example, the cellulose sheet is without perforations at the folds.

Still further in accordance with the aspect, for example, the joints have triangular shapes.

Still further in accordance with the aspect, for example, the joints are at locations of the container wherein the sheet material is folded into three overlapping layers.

Still further in accordance with the aspect, for example, the three overlapping layers include two of the autogenous welds.

Still further in accordance with the aspect, for example, the bottom wall has an irregular octagonal shape, and the container has eight of said joints.

Still further in accordance with the aspect, for example, the container is entirely made of the cellulose sheet.

Still further in accordance with the aspect, for example, an open top end of the container has a die-cut peripheral contour.

Still further in accordance with the aspect, for example, the joints are on an exterior of the receptacle.

Still further in accordance with the aspect, for example, the container further includes a rim surrounding a top of the side walls, the rim being part of the cellulose sheet.

Still further in accordance with the aspect, for example, the rim is planar.

Still further in accordance with the aspect, for example, the rim has overlapping layers at a junction between pairs of the side walls, the overlapping layers being connected by autogenous welds of the cellulose sheet.

Still further in accordance with the aspect, for example, the rim has a continuous arcuate contour.

Still further in accordance with the aspect, for example, the cellulose sheets has creases at fold locations prior to folding.

### DESCRIPTION OF THE DRAWINGS

Reference is now made to the accompanying figures in which:
Fig. 1 is a first perspective view of a folded cardboard container in accordance with the present disclosure;
Fig. 2 is a second perspective view of the folded cardboard container of Fig. 1;
Fig. 3 is a plan view of a cardboard sheet used to form the folded cardboard container of Figs. 1 and 2;
Fig. 4 is a plan view of the cardboard sheet of Fig. 3, with a series of steps to folded the cardboard sheets into the folded cardboard container of Figs. 1 and 2;
Fig. 5 is a plan view of the cardboard sheet of Fig. 3, showing a layering configu ration;
Fig. 6A is a schematic view of an autogenous weld joint in a triple layer arrangement; and
Fig. 6B is a schematic view of an autogenous weld joint in a double layer arrangement.

### DETAILED DESCRIPTION

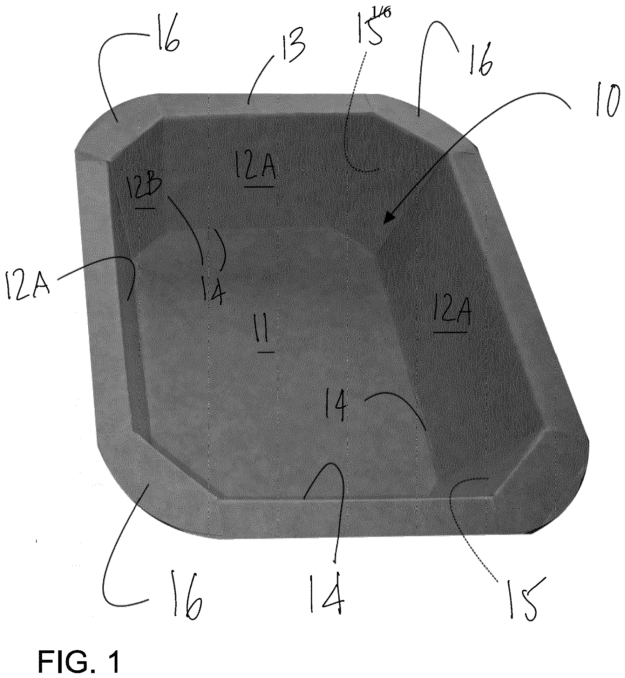

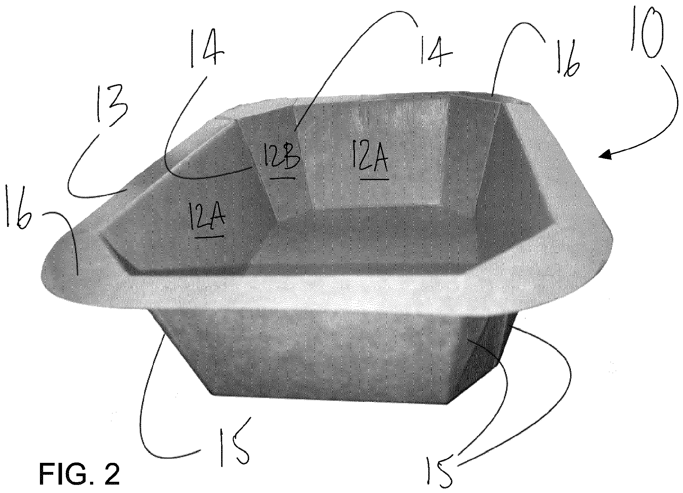

Referring to the drawings and more particularly to Figs. 1 and 2, a folded cardboard container in accordance with the present disclosure is generally shown at 10. The folded cardboard container 10 may also be known as a cellulose container, due to the use of cardboard as its main constituent. The container 10 may be referred to as a receptacle, a cup, a pot, a package, a tray, among other possible names. Moreover, while a container is shown, other objects may be made of labelled cellulose in accordance with the present disclosure, such as cups, trays, bowls, among examples. The container 10 may be used with a lid that may be releasably secured to a top of the container 10 to close a top opened end of the container 10. The lid may or may not be made of transparent plastic, of cellulose, etc. The container 10 may be used for packaging various items, whether in liquid, solid, gel, viscous forms, or as loose material or matter, granules, etc.

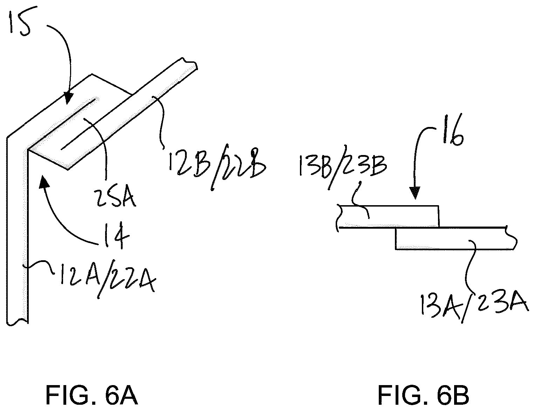

The container 10 has cellulose as a main material, and more particularly cellulose in the form of a sheet or panel, and may be known as paper, paperboard, cardboard. The cellulose is said to be the main material in that it makes up the greatest proportion by weight and/or by volume of the empty container 10. In a variant, the container 10 is said to be 100% fiber, in that no other materials are present in the cardboard sheet formed into the container 10. The cellulose may have any appropriate natural fibers such as wood fibers, plant fibers, straw, cereals, annual plants, etc. The cellulose may be made from recycled paper and water, cardboard, virgin cellulose. The sheet or panel making up the container 10 may be kraft paper. Additives can be added to the pulp to give given characteristics to the cellulose. The given characteristics may include colour, moisture resistance, enhanced shock resistance. Moreover, the cardboard sheet or panel making up the container 10 may be printed. For this reason, the cardboard sheet may also be known as a coated cardboard sheet (a.k.a., coated cardboard), and may have one or both of its surfaces coated, for receiving and containing ink. The coating may be of different types, but a mineral-based coating is particularly well suited to be used due to its eco-friendliness, and its capacity to act as an ink-receiving coating. For example, the coating may be a clay or limestone based coating. Other coatings may be used, including polymeric coatings. Also, adjuvants or solutes may be part of the coatings. In an embodiment, the coating may be said to be an integral part of the cardboard sheet, in that the coating is impregnated into the surface of the cardboard sheet and cannot be detached from it, unlike a film laminated to a surface of the cardboard. Stated differently, the cardboard sheet may be said to be non-laminated, or non-layered. The coating may be said to be a non-film coating, the coating may be applied in a liquid state onto the cardboard sheet, such that the coating may penetrate the surface(s) of the cardboard sheet. For illustrative purposes, Figs. 6A and 6B show such a non-film coating on only one of the surfaces, but both surfaces may be coated.

The container 10 shown in Figs. 1 and 2 defines an inner cavity or receptacle, by a bottom wall 11 and side walls 12. As observed, the bottom wall 11 is shown defining an irregular octagonal shape (eight sides), when seen from a top view, but any other appropriate polygonal shape may be used with other possible geometries. The shapes may include, rectangular, square, hexagonal, among possible straight-edge peripheral shapes. Geometries may include prisms and boxes, among possible geometries. In a variant, the container 10 may be constituted of flat surfaces and straight edges between surfaces.

Reference will now be made to the container 10 when laid on a horizontal surface as in Figs. 1 and 2 and thus with its open top end. In such an orientation, the container 10 may be said to have the side walls 12 projecting generally upwardly from the bottom wall (e.g., perpendicular to the bottom wall 11, or at other angles). There are eight different side walls 12 shown based on the exemplary geometry, with four larger side walls, shown as 12A, and four smaller side walls, shown as 12B. In the figures, reference numerals are shown as 12A and 12B, and concurrent reference to the side walls is made as side walls 12 in the present text. A rim 13 may optionally be present to define the top open end of the container 10. The rim 13 may also be known as a ridge, sealing flange, flange, sealing rim, etc. Alternatively, the top open end of the container 10 could be defined by the edges of the side walls 12. The rim 13 is shown as being generally planar, in that it may lie in a single plane, though this is optional. Moreover, the rim 13 may have a continuous arcuate contour. However, it is considered to have features such as ledges, waves, surface features, in the rim 13 to form part of connection features to releasably secure a lid to the container 10, for instance by complementary connection features on such a lid.

Fold lines 14, also known as sharp edges, are shown between the bottom wall 11 and the side walls 12. Other fold lines 14 may be between the side walls 12 and the rim 13. Still further fold lines 14 may be in various locations of the rim 13. The fold lines 14 result from the folding of a panel from which the container 10 is made.

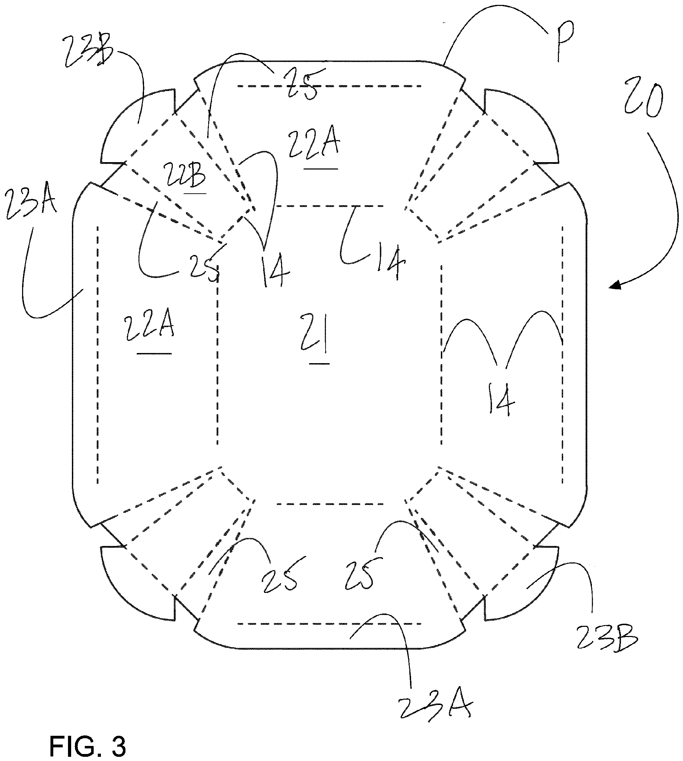

The bottom wall 11 and the side walls 12, and rim 13 if present, may be made of a single sheet of cellulose, shown in Figs. 3 to 5, as detailed below. The bottom wall 11 and side walls 12 concurrently define an outer exposed surface of the container 10. More specifically, when the container 10 has the lid thereon, the part of the container 10 that is seen is the outer exposed surface. The bottom wall 11 and side walls 12 also concurrently define an inner surface that may also be referred to as inner surfaces. As detailed below, the outer exposed surface and the inner surface may be the material of the sheet of cellulose, though it may optionally be considered to provide some additional surface coatings to provide given characteristics to the container 10, such as waterproofness or airtightness. The coatings may be applied after thermoforming of the container 10.

The combination of the bottom wall 11 and the side walls 12 define a concavity that may be referred to as the inner cavity of the container 10. It is the inner cavity that acts as a receptacle for receiving material in the container 10. The volume of the inner cavity may depend on the contemplated use. The inner cavity is shown as defined by the continuous, smooth surfaces of the bottom wall 11 and side walls 12, with the fold lines 14 separating the bottom wall 11 and side walls 12.

Still referring to Figs. 1 and 2, joints 15 are at junctions between adjacent pairs of the side walls 12. Joints 16 may also be present in the rim 13, if the container 10 has a rim. The joints 15 and 16 are defined by overlapping surfaces of the cellulose sheet that may result from folds in the cellulose sheet. The overlapping surfaces of the joints 15 and 16 are connected by thermoformed autogenous connection. The joints 15 are shown in Fig. 2 as, in the illustrated embodiment, being on the exterior surface of the container 10. It is however possible to have some of the joints 15 in the inner cavity of the container 10. The joints 15 may be triangular in shape, as illustrated in Fig. 2. Other shapes are possible.

The thermoformed connection may also be described as an autogenous weld joint, in that the sheet forming the container 10 is exposed to pressure and heat to adhere directly to itself, without the necessary of adding an adhesive, a film, a polymer. The thermoformed connection may be said to be a coated cardboard to coated cardboard joint. In an embodiment, in the joints 15 and 16, sheet to sheet planar contact and bond may therefore be achieved. The pressure and heat may be applied via a mold, a press, heated pressure plates, for example. To achieve the autogenous weld joint, substantial heating may be required, to approach a melting point of surface coating on the sheet and/or of polymeric adjuvants in the sheet. The adjuvants may be integrated into an aqueous phase dispersion. However, any polymeric content is not part of a film, and the main surfaces of the container 10 exhibit cellulose fibers or coatings as described above. Moreover, it may be desired to use product specific molds, e.g., with male and female complementary molds, to reach sufficient pressures for the autogenous welding. An exemplary thermoforming process is described below.

While the rim 13 is optional, the presence of joints 16 therein may contribute to the structural integrity of the folded cardboard container 10, in adding retention force to that of the side walls 11. In the illustrated embodiment of Figs. 1 and 2, the container 10 is entirely without perforations, notably at intersections between fold lines 14. Indeed, to facilitate folding it may be considered to perform cuts or holes in the sheet prior to folding same. When cuts are present, corners between edges in the formed container may be hosts to holes. However, the container 10 of the present disclosure may not have such holes at corners or intersections between the bottom wall 11 and the side walls 12, assisting the container 10 in not having leakage points.

Referring now to Figs. 3 to 5, a sheet 20 is shown, with the sheet 20 optionally being the sole constituent of the container 10 of Figs. 1 and 2. The sheet 20 may also be known as panel, paper, paperboard, cardboard. The sheet 20 may be 100% fiber, in that no other materials are present in the sheet 20, e.g., no adjuvants. The cellulose of the sheet may have any appropriate natural fibers such as wood fibers, plant fibers, straw, cereals, annual plants, etc, and may be made from recycled paper, cardboard, virgin cellulose. Some adjuvants may be present in the sheet 20 as mixed with the cellulose, the adjuvants being for example of polymeric nature (e.g., PET, PLA, PE). However, fibers are the prominent constituent of the sheet 20.

The sheet 20 may be cut so as to have a peripheral contour P, the peripheral contour P having a container specific outline. For example, a substantial portion of the peripheral contour P may define an outer edge of the rim 13 of the container 10 of Figs. 1 and 2, if the rim 13 is present. In another embodiment of the container 10 without the rim 13, the peripheral contour P may define a top edge of the side walls 12 of the container 10. In an embodiment, the sheet 20 is cut into the shape of Figs. 3 to 5 by a die cutter, through other options are contemplated (e.g., laser cutting).

In the sheet 20, bottom wall portion 21 would correspond to the bottom wall 11 of the formed container 10. Likewise, side wall portions 22 would correspond to the side walls 12 of the formed container 10. For example, side wall portions 22A correspond to side walls 12A, while side wall portions 22B correspond to side walls 12B. If present, rim portions 23 would correspond to the rim 13 of the formed container 10, with rim portions 23A and 23B projecting respectively from the side wall portions 22A and 22B. Creases 24 (or like weakening lines) may be defined in a surface of the sheet 20, at locations of the fold lines 14 in the formed container 10. In an embodiment, the creases 24 penetrate a surface of the sheet 20 but do not perforate through the whole thickness of the sheet 20. The creases 24 may also be a flattening of the sheet 20, a weakening of the material of the sheet 20, etc. The creases 24 may be straight lines, or series of dashes or points arranged in a linear pattern. Different types of tools may be used to form the creases 24 or like weakening lines, such as wheel cutters, laser cutters, knives, heated edges, etc. There results in the sheet 20 localized linear weaknesses facilitating a folding of the sheet 20, to form the fold lines. In an embodiment, if the creases 24 or like weakening lines are made in the sheet 20, it may be desired to have them on what will become the exterior surface of the formed container 10. In another embodiment, there are no such creases 24 or equivalent weakening features, with the sheet 20 folded using appropriate folding tools or techniques for the sheet 20 to be folded at a desired location of the fold lines 14 (Figs. 1 and 2). In an embodiment, there are no perforations through the thickness of the sheet 20 at the creases 24 or like weakening lines (if present). Stated differently, no holes are formed that would extend from side to side of the sheet 20 at the creases 24. In some instances, such as when the container 10 is used for fruits or like solids, it may be desired to have holes in the container 10, and thus holes may be present, for instance in the main surfaces of the side walls 12 (e.g., for air flow). However, unless desired, there are no holes in the corners or fold lines 14 between the bottom wall 11 and the side walls 12 in the formed container 10.

Still referring to Figs. 3 to 5, and Figs. 6A-6B, joint portions 25 correspond to parts of the joints 15 between side walls 12 in the formed container 10. The joint portions 25 are located between the side wall portions 22A and 22B, and are delimited by some of the creases 24 or like weakening lines. In the formed container 10, the joint portions 25 will have both their faces laid against surfaces of the adjacent side wall portions 22A and 22B (Fig. 6A). One or both of the surfaces of the joint portions 25 will be in autogenous thermoformed contact with the surfaces of the adjacent side wall portions 22. A side of the joint portions 25, may be greater than what is shown in Figs. 3 to 5, to reinforce the joints 15. However, a greater size of the joint portions 25 may reduce a volume of the container 10, whereby a selection of size may be a balance between strong joints and increased volume.

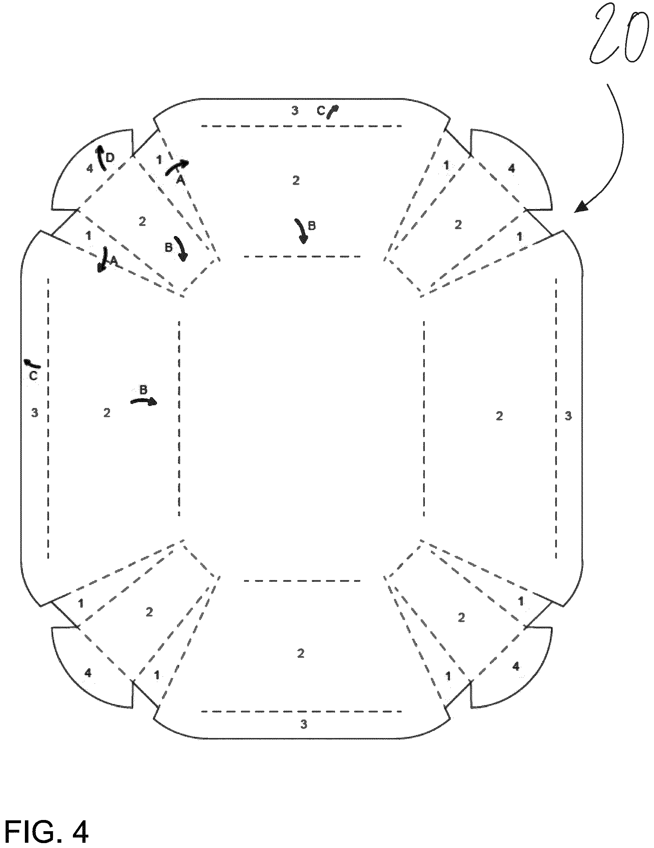

In order to fold the sheet 20 into the container 10, prior to subject same to the thermoforming process, one possible sequence is given, with reference to Fig. 4. Other folding sequences could be used. The sheet 20 is oriented to have its coated surface (if only one) so as to form the inner cavity of the container 10. According to the sequence, in a first step, the joint portions 25 are folded into contact with the side wall portions 22B. Arrows A in Fig. 4 are provided to illustrate such a maneuver, which may be done manually, or using robotic equipment. As an option, this first step may be done for the two joint portions 25 of a corner, e.g., the corner shown with arrows A in Fig. 4. As a second step, the two side wall portions 22A and the one side wall portion 22B of the corner may be folded relative to the bottom wall portion 21, as shown by arrow B in Fig. 4. As an option, these first and second steps are repeated for all corners. Alternatively, before this repeat, or after this repeat, the rim portions 23A and 23B may be folded outwardly, as shown by arrows C and D, respectively, with an overlap being created by ends of the rim portions 23A and 23B.

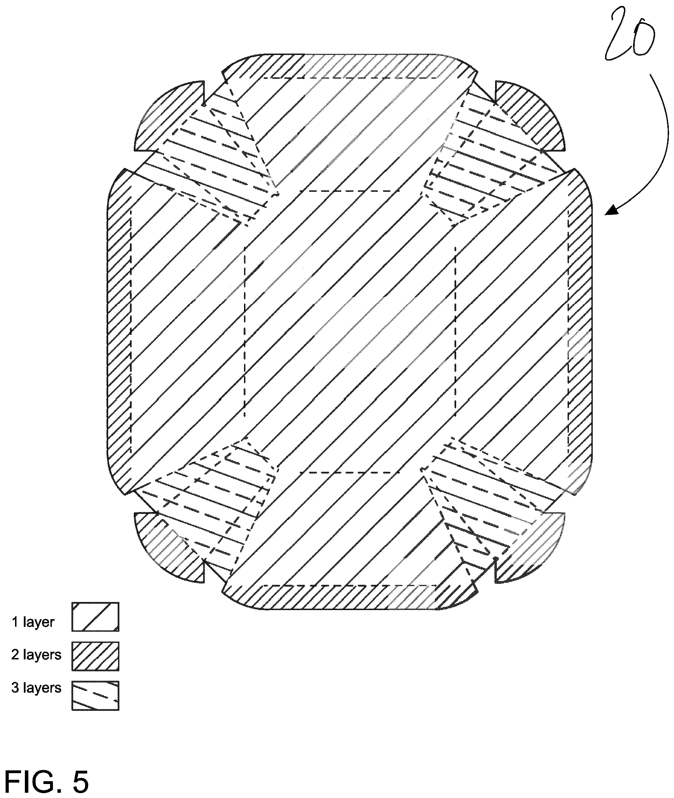

Referring to Figs. 5, 6A and 6B, there is illustrated the sheet 20 showing zones of the sheet 20 that will end up being part of a single layer of sheet 20 in the formed container 10, a double layer of sheet 20 in the formed container 10, and a tripled layer of sheet 20 in the formed container 10. As can be observed, the bottom wall portion 21, forming the bottom wall 11 of the formed container 10, is configured in a single layer format. The larger side walls 12A may also have the single layer format, though they could also have the triple layer format at their ends. The triple layer format is found where the joints 15 are located, i.e., at the side walls 12B, and can be observed in Fig. 6A, where the container 10 is three-layer thick with two autogenous weld joints, or a single one as it may not be required to have an autogenous weld joint for the two overlaps. For example, if a coating is present on only one of the two surfaces of the sheet, the autogenous weld joint may only be between surfaces having coating thereon. The triple layer format has a Z pattern as observed from Fig. 6A. Moreover, while a triple layer format is shown between side walls 12A and 12B, it is possible to have a double layer format of joint, for instance by having joints project transversely from the surfaces of the side walls 12A, 12B. As for the double layer format, it may be present due to an overlap between ends of the rim portions 23A and 23B overlapping one another after the container 10 is folded into shape. This can be observed in Fig. 6B, where the container 10 is two-layer thick with one autogenous weld joint. In such a case, it may be that only one of the two surfaces of the autogenous weld joint is coated, as observed from Fig. 6B. The rim portions 23A and 23B form the joints 16 in Figs. 1 and 2. Figs. 6A and 6B are schematic by nature and do not depict precisely the behavior of the cellulose sheet when folded. Figs. 6A and 6B are provided to illustrate the double layer and triple layer formats.

Once folded in accordance with the sequence set out in Fig. 5, or any other sequence, there results a container shaped as in Figs. 1 and 2, though without the joints 15 and 16 formed. The folded and non-thermoformed container 10 must thus be subject to the thermoforming process.

The container may be inserted into a mold cavity or other heat forming apparatus to be subjected to a thermoforming process that will create the autogenous weld joints 15 and 16, also known as autogenous welds. In an embodiment, a pressure on the container 10 is increased to reach a predetermined value of a given amount of time at a desired temperature, for the autogenous weld joints 15 and 16 (if present) to be formed. The pressure, temperature and duration of the process may be varied to achieve the afore-mentioned fusion, preferably in cycles in an order of magnitude of seconds.

In addition to the integral sheet coating that is part of the coated carboard prior to folding, an additional coating may be applied after the thermoforming of the container 10. The coating may be any appropriate type of coating to provide some characteristics to the container 10. For example, the coating may be a wax, a polymer, a metal (e.g., aluminum foil), and as a result properties such as airtightness, waterproofness, may be enhanced in the container 10. Additional coating layers may be provided, for instance on top of the coating, or on the outer exposed surface of the container 10. However, in an embodiment, the container 10 is made of the cellulose sheet 20 alone, without coatings, films, glues, etc.

The above description is meant to be exemplary only, and one skilled in the art will recognize that changes may be made to the embodiments described without departing from the scope of the invention disclosed. For example, lids may also be made according to the technique described for the container 10. Still other modifications which fall within the scope of the present invention will be apparent to those skilled in the art, in light of a review of this disclosure, and such modifications are intended to fall within the appended claims.

## Claims

1. A container comprising:
a cellulose sheet, the cellulose sheet folded into
a receptacle having a bottom wall and side walls, and
joints at junctions between adjacent pairs of the side walls;
**characterized in that**
the joints are defined by overlapping surfaces of the cellulose sheet resulting from folds in the cellulose sheet, the overlapping surfaces being connected by autogenous welds of the cellulose sheet.

2. The container according to claim 1, **characterized in that** the cellulose sheet is a 100% fiber sheet having an integral surface coating on at least one surface thereof.

3. The container according to any one of claims 1 and 2, **characterized in that** the cellulose sheet is without perforations at the folds.

4. The container according to any one of claims 1 to 3, **characterized in that** the joints have triangular shapes.

5. The container according to any one of claims 1 to 4, **characterized in that** the joints are at locations of the container wherein the sheet material is folded into three overlapping layers.

6. The container according to claim 5, **characterized in that** the three overlapping layers include two of the autogenous welds.

7. The container according to any one of claims 1 to 6, **characterized in that** the bottom wall has an irregular octagonal shape, and the container has eight of said joints.

8. The container according to any one of claims 1 to 7, **characterized in that** the container is entirely made of the cellulose sheet.

9. The container according to any one of claims 1 to 8, **characterized in that** an open top end of the container has a die-cut peripheral contour.

10. The container according to any one of claims 1 to 9, wherein the joints are on an exterior of the receptacle.

11. The container according to any one of claim 1 to 10, **characterized in that** the container further includes a rim surrounding a top of the side walls, the rim being part of the cellulose sheet.

12. The container according to claim 11, **characterized in that** the rim is planar.

13. The container according to any one of claims 11 to 12, **characterized in that** the rim has overlapping layers at a junction between pairs of the side walls, the overlapping layers being connected by autogenous welds of the cellulose sheet.

14. The container according to any one of claims 11 to 13, **characterized in that** the rim has a continuous arcuate contour.

15. The container according to any one of claims 1 to 14, **characterized in that** the cellulose sheets has creases at fold locations prior to folding.
